# EUROPÄISCHE PATENTSCHRIFT

(11) **EP 1 750 921 B1**
(45) Veröffentlichungstag und Bekanntmachung des Hinweises auf die Patenterteilung: **30.07.2008**
(21) Anmeldenummer: 05707204.3
(22) Anmeldetag: 04.02.2005
(51) Int. Cl.: B29C 43/14, B29C 70/46, F41H 1/00, F41H 7/00, B32B 7/08

(54) **VERFAHREN ZUR HERSTELLUNG EINES BALLISTISCHEN SCHUTZPANZERS**
METHOD FOR PRODUCING A BALLISTIC PROTECTIVE ARMOUR
PROCEDE DE PRODUCTION D'UN BLINDAGE DE PROTECTION BALISTIQUE

(43) Veröffentlichungstag der Anmeldung: 14.02.2007
(73) Patentinhaber: Busch, Egon, 33334 Gütersloh (DE)
(72) Erfinder: Busch, Egon, 33334 Gütersloh (DE)
(74) Vertreter: Steinmeister, Helmut
(86) Internationale Anmeldenummer: PCT/EP2005/001147
(87) Internationale Veröffentlichungsnummer: WO 2006/081834

(56) Entgegenhaltungen:
- DE-A1- 19 944 475
- US-A- 4 199 388
- US-A- 5 545 455
- US-B1- 6 276 100

## Beschreibung

Die vorliegende Erfindung betrifft ein Verfahren zur Herstellung eines ballistischen Schutzpanzers gemäß dem Oberbegriff des Anspruchs 1.

Ballistische Schutzpanzer sind in unterschiedlichen Ausführungsformen als Bestandteil ballistischer Schutzkleidung bekannt, wie etwa als militärische Helme zum Schutz gegen Projektileinschläge und Granatsplitter, als Splitterschutzwesten und dergleichen mehr. Zur Herstellung eines Schutzpanzers der hier vorliegenden Art werden zunächst einzelne textile Lagen aus einem hochfesten technischen Gewebe aufeinander verlegt, so dass ein Schichtgelege entsteht. Nach dem Herstellungsverfahren, das in dem Dokument US-A-4,199.388 offenbart ist, werden die textilen Lagen dieses Schichtgeleges zu einem Vorformling vorgepresst, der anschließend mit einer höheren Temperatur heißgepreßt wird, so dass ein Laminat entsteht.

Ferner offenbart die Patentschrift US-A-3,841,954 einen Schutzpanzer, bei welchem die textilen Lagen des Schichtgeleges miteinander vernäht und anschließend einem Preßvorgang unterzogen werden. Der dort gezeigte Schutzpanzer dient als rückseitige Verstärkung einer weiteren Panzerungsschicht, so dass eine hohe Widerstandsfähigkeit gegenüber einem Splittereinschlag geschaffen wird.

Durch das Vernähen können die Dichte und Festigkeit des Schichtgeleges gesteigert werden, so dass die Schutzwirkung des Panzers verbessert wird. Darüber hinaus ist es bekannt, ballistische Schutzpanzer aus laminierten textilen Lagen herzustellen, die die Energie eines aufprallenden Projektils weitgehend absorbieren. Dies geschieht dadurch, dass das Projektil die äußeren Lagen des Laminats durchschlägt, sich hierbei verformt und durch die verbleibenden Lagen an der zu schützenden Innenseite des Panzers aufgefangen wird, da die kinetische Energie nach der Zerstörung der Außenlagen bereits stark verringert ist. Diese verbleibenden Fanglagen lösen sich von den durchschlagenen Außenlagen teilweise ab, so dass eine Ausbeulung zur Innenseite des Schutzpanzers hin entsteht, in der das Projektil verbleibt. Da ein übermäßiger Ausbeulungseffekt zu Traumata beim Träger des ballistischen Schutzpanzers führen kann, also beispielsweise beim Träger eines derartig aufgebauten militärischen Schutzhelms zu starken Kopfverletzungen, ist es möglich, den Ablösungs-, d.h. Delaminationseffekt der Fanglagen durch das Anbringen von Nähten zu begrenzen. Auf diese Weise ist es möglich, einen Schutzpanzer aus einem Textillaminat herzustellen, der einen Treffer gut absorbiert, die zu schützende Person jedoch vor Verletzungen bewahrt.

Damit ein möglichst hoher Tragekomfort gewährleistet wird und eine möglichst umfassende Schutzwirkung erreicht wird, muss der ballistische Schutzpanzer gut an die Körperform des Trägers angepasst sein. Es ist daher erwünscht, die Panzer in einer möglichst großen Vielfalt verschiedener Formen herstellen zu können. Dies ist jedoch nicht immer unproblematisch, da bei einem nachträglichen Verbiegen, Stauchen, Tiefziehen oder dergleichen die innere Struktur des relativ starren Textillaminats auf solche Weise verändert wird, daß die Schutzwirkung insgesamt oder stellenweise beeinträchtigt werden kann. Insbesondere ist es nachteilig, wenn eine zur Bildung des Laminats auf die textilen Lagen aufgetragene Beschichtung zu weit in die Fasern eindringt, da das Gewebe der textilen Lagen und das Garn der Nähte definierte Eigenschaften in Bezug auf Elastizität und Zugfestigkeit beibehalten müssen. Beispielsweise ist der in US 3,841,954 offenbarte Schutzpanzer nach dem Vernähen und anschließendem Pressen zwar in gewissem Umfang biegsam, lässt sich jedoch nicht sphärisch, also z.B. zu einer Halbkugel verformen. Somit lassen sich auch keine Helmschalen herstellen.

Aufgabe der vorliegenden Erfindung ist es daher, ein Verfahren zur Herstellung eines ballistischen Schutzpanzers der eingangs genannten Art zu schaffen, das es ermöglicht, Schutzpanzer in einer größeren Vielfalt von Raumformen herzustellen, als es gemäß dem bekannten Stand der Technik bisher möglich war, ohne dass die Schutzeigenschaften beeinträchtigt werden. Insbesondere liegt eine Aufgabe der vorliegenden Erfindung darin, die Herstellung von Helmschalen aus einem beschichteten Textilmaterial zu ermöglichen, das aus miteinander vernähten und gepressten textilen Lagen zusammengesetzt ist.

Diese Aufgabe wird erfindungsgemäß durch ein Verfahren gemäß Anspruch 1 gelöst.

Erfindungsgemäß werden die textilen Lagen des Schichtgeleges vor dem Vernähen zu einem Vorformling vorgepreßt, dessen Raumform bereits dem herzustellenden Endprodukt entspricht, also beispielsweise der gewünschten Kalottenform. Anschließend werden die textilen Lagen dieses vorgepreßten Vorformlings miteinander vernäht. Der Verarbeitungsprozeß wird durch einen Heißpreßvorgang abgeschlossen, der bei einer höheren Temperatur durchgeführt wird, als beim Vorpressen zur Herstellung des Vorformlings. Während der Vorpreßvorgang im wesentlichen dazu dient, vor dem Schritt des Vernähens dem Schichtgelege bereits die gewünschte Form zu verleihen, werden die Lagen beim Heißpressen abschließend verdichtet, so dass das gewünschte Laminat mit hoher Festigkeit entsteht. Hierdurch erlangt der hergestellte ballistische Schutzpanzer im übrigen auch seine Gestaltfestigkeit.

Ein Vorteil des erfindungsgemäßen Verfahrens liegt darin, dass die Form des Endprodukts bereits vor dem Vernähen vorliegt und durch das abschließende Heißpressen keine wesentliche Veränderung der Produktform mehr vorgenommen wird. Der Vorformling wird nach dem Vernähen nicht mehr verbogen oder gestaucht, so dass er seine Struktur beim Heißpressen beibehält. Daher bleibt die Gewebestruktur der textilen Lagen ebenso erhalten wie die Dehnungseigenschaften des zum Vernähen verwendeten Garns, so dass seine Zugfestigkeit und Elastizität ausreichend bleiben, um den den Zusammenhalt des Laminats beim Einschlag eines Projektils in den Schutzpanzer weitgehend zu gewährleisten.

Vorteilhafte Ausgestaltungen der Erfindung ergeben sich aus den Unteransprüchen. Bevorzugt wird unter anderem ein Verfahren zur Herstellung der Helmschale eines ballistischen Schutzhelms beansprucht.

Im folgenden wird ein bevorzugtes Ausführungsbeispiel der Erfindung anhand der Zeichnung näher erläutert.
- Fig. 1: ist ein Ablaufdiagramm zur schematischen Darstellung einer bevorzugten Ausführungsform des erfindungsgemäßen Verfahrens;
- Fig. 2-9: sind schematische Darstellungen einzelner Verfahrensschritte aus Fig. 1:
- Fig. 10a-10j: sind Draufsichten auf beispielhafte Zuschnitte textiler Lagen zur Bildung eines Schichtgeleges, und
- Fig. 11: ist eine Ansicht des Endprodukts des erfindungsgemäßen Verfahrens von unten.

Im folgenden soll beispielhaft die Herstellung eines sphärisch gewölbten ballistischen Schutzpanzers beschrieben werden, der als Helmschale eines ballistischen Schutzhelms dienen soll. Als Ausgangsmaterial dienen textile Lagen, die aus einem hochfesten Garn oder technischen Fasern wie etwa Aramid, hochmolekularem Polyethylen oder dergleichen gewoben sind und zumindest einseitig mit einem Verbindungsmittel wie etwa Harz, Kunststoff oder Klebstoff kaschiert sind. Dies kann durch Auftragen eines Harz-Films entstehen, der sich im erwärmten Zustand an die Oberfläche des Gewebes anschmiegt, ohne in die Fasern einzudringen. Beim Heißpressen wird eine Laminatverbindung der textilen Lagen miteinander gebildet, indem das Verbindungsmittel teilweise in die textilen Lagen eindringt, jedoch nur so weit, dass die Elastizität und Beweglichkeit der Gewebefasern erhalten bleiben. Somit können die textilen Lagen durch eine Dehnung in gewissem Umfang die kinetische Energie eines einschlagenden Projektils aufnehmen.

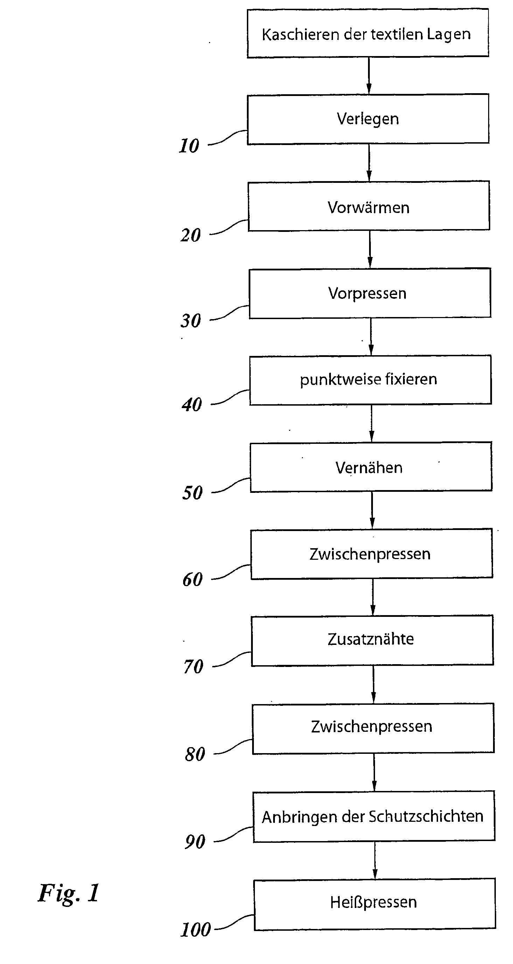

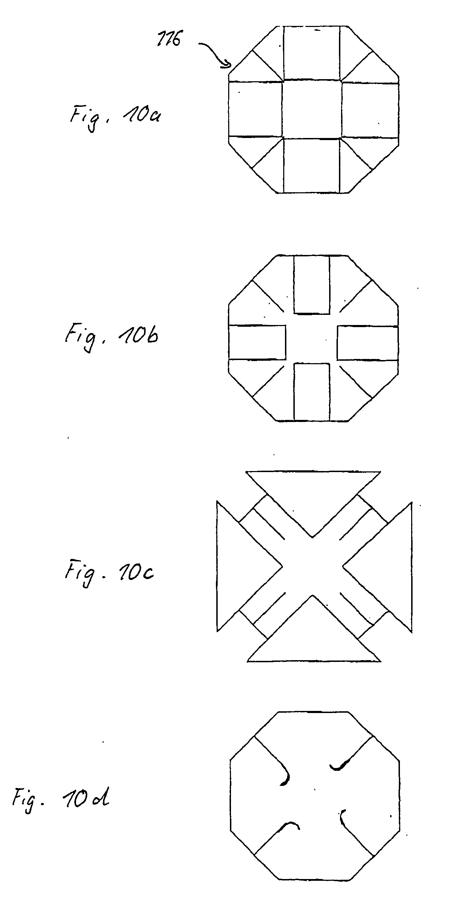

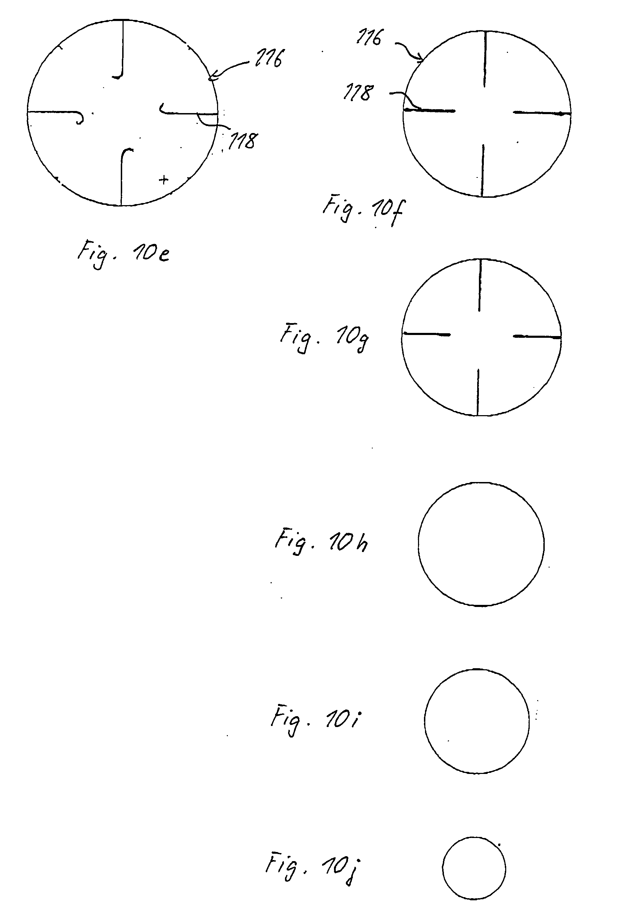

Ein Vorbereitungsschritt des erfindungsgemäßen Verfahrens kann demnach in der Vorbereitung einzelner textiler Lagenzuschnitte durch die zuvor beschriebene Kaschierung mit einem Verbindungsmittel wie etwa Harz, Kunststoff oder Klebstoff bestehen. Die Zuschnitte der textilen Lagen, von denen in Fig. 10a bis 10j einige beispielhaft dargestellt sind, werden zunächst in einem in Fig. 1 mit 10 bezeichneten Schritt in einer vorbestimmten Reihenfolge aufeinander verlegt. Zum Teil sind die Lagen mit radialen Einschnitten versehen, die es gestatten, der Lage durch Überlappen von Flächenbereichen eine gewölbte Form zu verleihen und damit die Weiterverarbeitung zu einer annähernd sphärischen Form zu erlauben.

Da die kaschierten textilen Lagen üblicherweise eine hohe Steifigkeit aufweisen, kann der Vorgang des Schichtens 10 zu einem Schichtgelege in einer Form erfolgen, die auch als Vorwärmform dient. Da die Anzahl der verwendeten textilen Lagen sehr groß sein kann, kann es sich als hilfreich erweisen, das Schichtgelege beispielsweise durch Klammern am Rand der Vorwärmform zu fixieren. Während eines Vorwärmschritts 20 werden die textilen Lagen erwärmt und schmiegen sich aneinander und auf die Oberfläche der Vorwärmform 110, die vorteilhafterweise bereits annähernd die Form des herzustellenden Endprodukts aufweisen kann.

Nach dem Vorwärmschritt 20 wird das Schichtgelege in einem Vorpreßvorgang 30 kalt vorgepreßt, so dass ein Vorformling entsteht, dessen Raumform bereits dem herzustellenden Endprodukt entspricht. Die textilen Lagen dieses Vorformlings können nach dem Vorpreßvorgang 30 punktweise durch Klammern oder dergleichen aneinander fixiert werden (Schritt 40), so dass ihr Zusammenhalt gewährleistet bleibt. Darauf folgend werden die textilen Lagen des Vorformlings miteinander vernäht (Schritt 50). Auf das Vernähen kann ein Zwischen-Preßvorgang 60 erfolgen, nach welchem weitere Nähte zur Verstärkung kritischer Zonen des ballistischen Schutzpanzers angebracht werden können (Schritt 70). Nach einem zusätzlichen Zwischen-Preßvorgang 80 kann der nunmehr vollständig vernähte Vorformling auf seiner Innen- und/oder Außenseite mit einer Schutzschicht versehen werden (Schritt 90). Schließlich wird der vernähte Vorformling gemeinsam mit seinen Schutzschichten in einem Heißpressvorgang 100 gepresst, so dass die textilen Lagen durch das auf ihnen aufgetragene Verbindungsmittel zu einem Laminat verbunden werden. Der auf diese Weise hergestellte ballistische Schutzhelm wird einerseits durch die Laminat-Verbindung der textilen Lagen untereinander und andererseits zusätzlich durch die beim Vernähen 50, 70 angebrachten Nähte zusammengehalten.

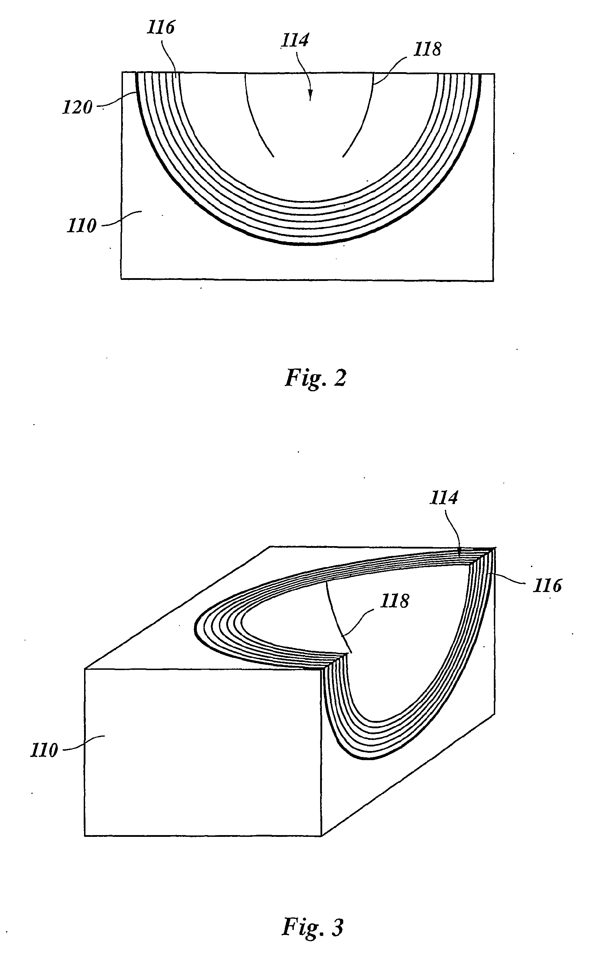

Die in Fig. 1 dargestellten Verfahrensschritte werden im folgenden anhand der Fig. 2 bis 9 detailliert erläutert.

Fig. 2 zeigt schematisch einen Schnitt durch eine Vorwärmform 110, deren Innenfläche 112 zur Aufnahme eines Schichtgeleges 114 aus textilen Lagen halbkugelförmig ausgebildet ist. Die einzelnen textilen Lagen, von denen in Fig. 2 eine textile Lage stellvertretend mit der Bezugsziffer 116 versehen ist, bestehen aus Garnen oder Fasern mit hoher Zugfestigkeit wie etwa hoch molekularem Polyethylen, Aramid oder dergleichen und sind in einem Vorbehandlungsschritt mit einem Verbindungsmittel wie etwa Harz, Kunststoff oder Klebstoff einseitig kaschiert worden. Dieses textile Lagenmaterial weist gewöhnlich eine gewisse Steifigkeit auf, so dass es vorteilhafterweise vor der Weiterverarbeitung innerhalb der Vorwärmform 110 erwärmt wird. Zu diesem Zweck kann der in Fig. 1 mit 10 bezeichnete Verfahrensschritt des Verlegens der textilen Lagen 116 in der Vorwärmform 110 selbst durchgeführt werden. Radiale Einschnitte 118 in den Lagenzuschnitten erleichtern die Anpassung an die Vorwärmform 110. Das so entstehende Schichtgelege 114 kann vorübergehend in oder an der Form fixiert werden, damit sich die textilen Lagen 116 nicht gegeneinander verschieben.

Wird die Vorwärmform 110 bzw. deren Innenfläche 112 auf geeignete Weise beheizt, so schmiegen sich die textilen Lagen 116 des Schichtgeleges 114 an die halbkugelförmige Innenfläche 112 an, da sich das textile Lagenmaterial und das aufgeschichtete Verbindungsmittel erwärmen und die Lagen dadurch flexibel werden. Der Vorwärmvorgang wird vorzugsweise bei einer Temperatur der Vorwärmform 110 von 60° C durchgeführt. Im Idealfall liegen die einzelnen textilen Lagen 116 nach dem Schritt 20 des Vorwärmens glatt aufeinander, so dass das Schichtgelege 114 eine Halbkugelform annimmt. Fig. 3 zeigt die seitlich aufgeschnittene Vorwärmform 110, die das Schichtgelege 114 enthält, in einer perspektivischen Ansicht.

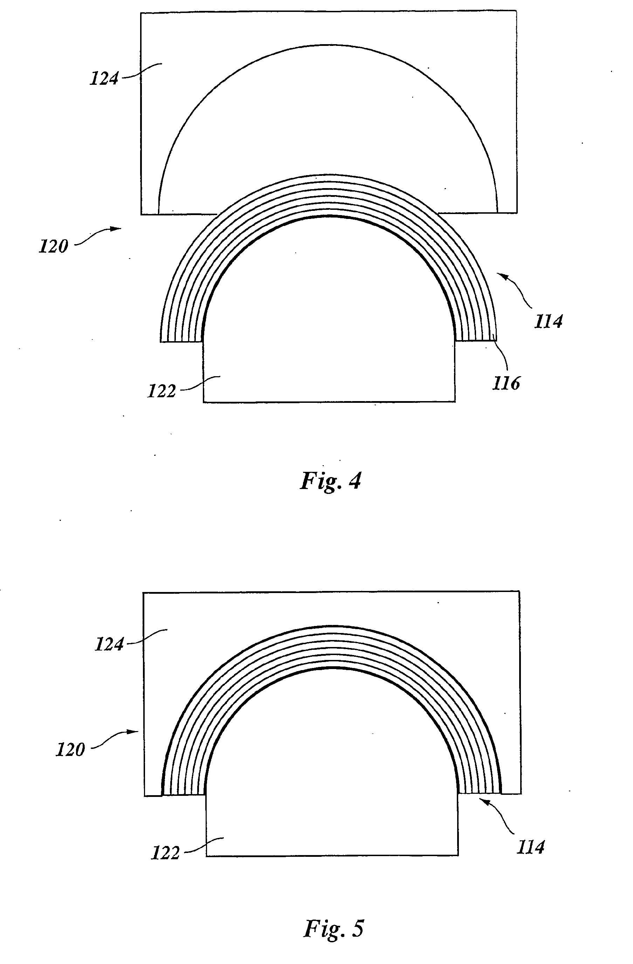

Nach dem Vorwärmen wird das halbkugelförmige Schichtgelege 114 in eine Kaltpresse 120 verbracht, wie es in Fig. 4 dargestellt ist. Die Kaltpresse 120 umfasst eine halbkugelförmige untere Formhälfte 122, auf die das Schichtgelege 114 mit seiner hohlen Innenseite aufgelegt wird, und eine hohle, ebenfalls halbkugelförmige obere Formhälfte 124, die dazu vorgesehen ist, auf solche Weise auf die untere Formhälfte 122 abgesenkt zu werden, dass sie die Außenseite des Schichtgeleges 114 umschließt, so wie in Fig. 5 gezeigt. In diesem Zustand wird das Schichtgelege 114 aus textilen Lagen 116 kalt vorgepreßt (Verfahrensschritt 30 in Fig. 1). Hierbei sind Preßdruck und Temperatur so zu wählen, daß ein Zwischenprodukt mit einer bereits relativ kompakten Lagenpackung entsteht, deren Lagen sich nicht ohne weiteres von selbst voneinander lösen. Das Vorpressen kann beispielsweise bei Zimmertemperatur und bei einem Druck von 150 kg/cm² durchgeführt werden.

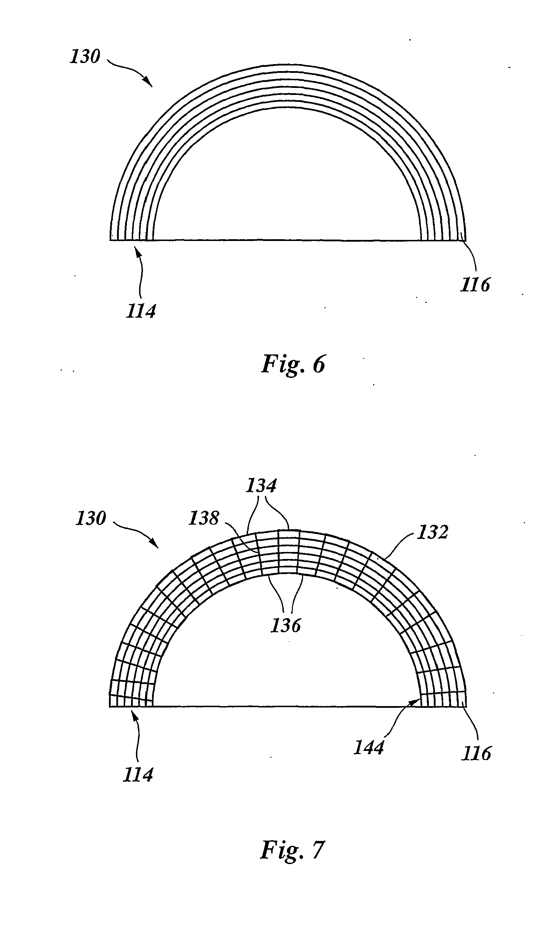

Der durch den Vorpreßvorgang 30 hergestellte Vorformling 130, der in Fig. 6 dargestellt ist, weist bereits die Form des herzustellenden ballistischen Schutzpanzers auf, also beim vorliegenden Ausführungsbeispiel die angestrebte Form der Helmschale. Seine endgültigen Schutzeigenschaften erhält er jedoch erst durch weitere Verfahrensschritte, die im folgenden erläutert werden.

Die einzelnen textilen Lagen 116 des Vorformlings 130 lassen sich vor der Weiterverarbeitung stellenweise aneinander fixieren (Verfahrensschritt 40 in Fig. 1), etwa durch punktweises Anbringen von Verbindern wie Klammern oder dergleichen, die an verschiedenen Stellen in das Schichtgelege 114 eingeschossen werden. Diese Verbinder sind in Fig. 6 der Übersicht halber nicht dargestellt. Der Vorformling 130 aus Fig. 6 wird anschließend vernäht, wie es in Fig. 7 schematisch dargestellt ist (Verfahrensschritt 50 in Fig. 1). Zu diesem Zweck wird der vorgepreßte und ggf. punktweise fixierte Vorformling 130 mit einer Nähmaschine mit Nähten versehen, die die einzelnen textilen Lagen 116 des Schichtgeleges 114 zusammenhalten. In Fig. 7 ist eine mäandrierende Naht 132 dargestellt, die abschnittsweise sowohl auf der Innenseite als auch auf der Außenseite des Vorformlings 130 verläuft, und die auf der Innen- und auf der Außenseite verlaufenden Abschnitte 134 und 136 sind durch Abschnitte 138 der Naht 132 verbunden, die sich in radialer Richtung der Halbkugel des Vorformlings 130, das heißt, in der Schichtungsrichtung erstrecken und somit den Zusammenhalt der textilen Lagen 116 gewährleisten. Das Stichmuster der Naht 132 ist in Fig. 6 stark vereinfacht und kann auch aufwändiger gestaltet sein. Die Nähweise lässt sich beliebig an die geforderten Schutzeigenschaften des herzustellenden ballistischen Schutzhelms anpassen. Das Garn der Naht 132 ist so zu wählen, dass es eine hohe Zugfestigkeit aufweist, jedoch gleichzeitig eine gewisse Elastizität, so dass es beim Einschlag eines Geschosses in das Lagenpaket 114 nicht zum Abscheren einer großen Anzahl von Garn-Abschnitten 138 in der Schichtungsrichtung nach innen kommt. Es ist von Vorteil, wenn das Garn 132 einen großen Teil der Geschoßenergie aufnehmen kann und sich herbei dehnt. Eine teilweise Delamination der inneren textilen Lagen 116 des Lagenpakets 114 wird hierbei in gewissem Umfang in Kauf genommen.

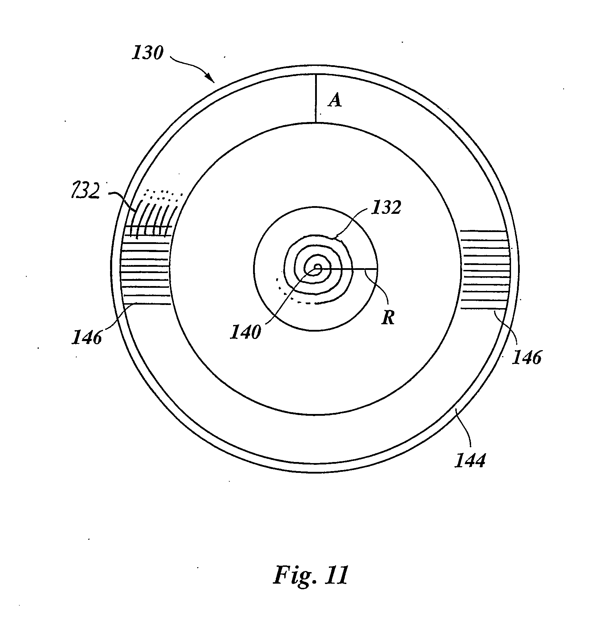

Der Verlauf der Naht 132 kann so gewählt werden, dass sich die Naht vom Flächen-Mittelpunkt 140 der Kalotte des Vorformlings 130 ausgehend spiralförmig um diesen Mittelpunkt 140 herum bis zum Rand 142 der Kalotte windet, wie es ergänzend in Fig. 11 dargestellt ist, die eine Draufsicht auf die Innenfläche 144 des Vorformlings 130 zeigt. Der Übersichtlichkeit halber ist nur ein Teil der spiralförmigen Bahn der Naht 132 gezeigt, und es versteht sich, daß sich die Naht 132 auf die gezeigte Weise bis zum Rand hin fortsetzt.

Der spiralförmige Verlauf der Naht 132 vereinfacht die Verarbeitung, da sich der Vorformling 130 auf diese Weise leicht in der Nähmaschine halten und sich in dieser durch eine Drehbewegung führen lässt. Die radialen Abstände der Naht 132 können hierbei variieren. Grundsätzlich gilt, dass der Zusammenhalt des Schichtgeleges 114 besser wird, je dichter die Nähte verlaufen. Unter Berücksichtigung des Nahtabstands, der Elastizität und Zugfestigkeit des Garns der Naht 132 sowie der textilen Lagen 116 und des Anteils des Verbindungsmittels im Schichtgelege 114 (also z.B. des Harzanteils) lassen sich die Schutzeigenschaften des Endprodukts so einstellen, dass ein ausreichender Perforationswiderstand erreicht wird und ein Ablösen der inneren textilen Lagen 116 des Schichtgeleges 114 , durch ein eindringendes Geschoß nur in geringem Umfang stattfindet. Wird beispielsweise der Harzanteil des Schichtgeleges 114 gering gehalten, um das Gewicht des Schutzpanzers zu vermindern, wird der Ablöseeffekt der inneren Lagen 116 begünstigt, was jedoch durch einer Verringerung des Nahtabstands ausgeglichen werden kann. Die Naht 132 ist somit eine Zusatzkomponente, die eine Verringerung des Harzanteils ermöglicht, ohne daß die Schutzwirkung beeiträchtigt wird.

In einem kreisförmigen Bereich R um dem Flächenmittelpunkt 140 der Kalotte des Vorformlings 130 herum kann der Nahtabstand in radialer Richtung beispielsweise 6 mm betragen, während er außerhalb dieses Bereichs R auf 10 mm anwächst. In einem streifenförmigen Randbereich A, der sich in Umfangsrichtung des Vorformlings 130 entlang des Rands 142 erstreckt, kann der Nahtabstand wiederum auf 6 mm abnehmen.

Nach dem Vernähen 50 kann der Vorformling 130 einem Zwischen-Preßvorgang unterzogen werden , (Verfahrensschritt 60 in Fig. 1), der dazu dient, dem Schichtgelege 114 des Vorformlings 130 einen noch festeren Zusammenhalt zu geben. Nach diesem Zwischen-Preßvorgang 60 können zusätzliche Nähte 146 in bestimmten Bereichen des Vorformlings 130 angebracht werden, die die spiralförmige Naht 132 kreuzen und besonders gefährdete Bereiche des herzustellenden ballistischen Schutzhelms verstärken sollen, wie beispielsweise die Ohrbereiche. Nach der Anbringung dieser zusätzlichen Nähte (Verfahrensschritt 70) kann ein weiterer Zwischen-Preßvorgang durchgeführt werden (Schritt 80). Demnach lässt sich nach jedem Nähvorgang 50,70 ein Zwischen-Preßvorgang 60,80 durchführen.

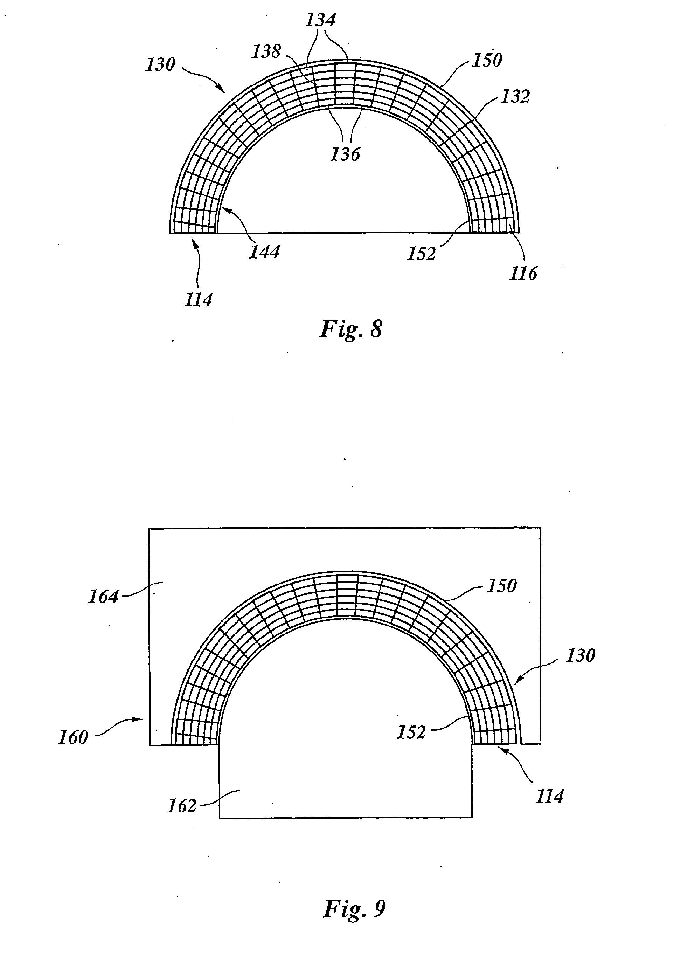

Nachdem der Vorformling 130 vollständig vernäht ist, werden auf seiner Innenseite und auf seiner Außenseite Schutzschichten angebracht, die die Nähte 132,146 an ihren frei auf den Oberflächen aufliegenden Abschnitten 134,136 fixieren und diese vor Beschädigungen schützen. Bei der äußeren Schutzschicht 150 handelt es sich um eine beidseitig mit dem Verbindungsmittel, also mit Harz, Kunststoff oder Klebstoff kaschierte textile Lage aus dem gleichen oder einem ähnlichen Material wie die bereits vernähten textilen Lagen 116. Diese textile Außenlage 150 wird schichtartig auf dem Vorformling 130 verlegt, während die gegenüberliegende Innenseite 144 des Vorformlings 130 lediglich mit dem Verbindungsmittel beschichtet wird, mit welchem auch die textilen Lagen 116 und 150 beschichtet sind. Das heißt, eine Schicht 152 aus Harz, Kunststoff oder Klebstoff ist auf der halbkugelförmigen Innenfläche 144 des Vorformlings 130 aufgetragen und schützt und fixiert die innenliegenden Abschnitte 136 des Garns 132, so dass der Vorformling 130 von beiden Oberflächenseiten her geschützt ist und das Garn 132 im Fall einer Beschädigung des textilen Schichtgeleges 114 nicht abschnittsweise aus den Stichkanälen herausgleiten kann. Dieser Verfahrensschritt des Aufbringens von Schutzschichten 150,152 (Schritt 90 in Fig. 1) ist in Fig. 8 gezeigt:

Schließlich wird der mit den Schutzschichten 150 und 152 versehene Vorformling 130 einem. Heißpreßvorgang unterzogen, der in Fig. 9 dargestellt ist. Der beschichtete Vorformling 130 wird zu diesem Zweck in eine Heißpresse 160 gebracht, das heißt, der Vorformling 130 wird mit seiner hohlen Innenseite auf eine entsprechende untere Formhälfte 162 aufgelegt, während eine halbkugelförmige hohle obere Formhälfte 164 dazu vorgesehen ist, senkrecht auf die untere Formhälfte 162 abgesenkt zu werden. Das Heißpressen (Schritt 100 in Fig. 1) wird vorzugsweise bei einer Temperatur zwischen 150° C und 175° C und bei einem Druck von 200 kg/cm², durchgeführt, also bei höheren Druck- und Temperaturwerten als bei den vorhergehenden Vor- und Zwischen-Preßvorgängen 30,60,80. Beim Heißpressen dringt die Verbindungsmittel-Beschichtung der einzelnen textilen Schichten 116 teilweise in das Gewebe ein und bildet eine Verbindungsmatrix, durch welche die textilen Schichten 116 untereinander zu einem Laminat verbunden werden. Hierbei kann das Schichtgelege 114 des Vorformlings 130 geringfügig komprimiert werden, ohne dass die Gestalt des Vorformlings 130 verändert wird. Die textile äußere Schutzschicht 150 und die innere Schutzschicht 152 werden ebenfalls Bestandteile dieses Laminats und gehen eine feste Verbindung mit dem vernähten Schichtgelege 114 des Vorformlings 130 ein.

Die sphärisch gewölbte Form des Vorformlings 130 wird durch das Heißpressen 100 nicht mehr verändert. Daher besteht auch nicht die Gefahr, dass die Lagenstruktur des Schichtgeleges 114, die bereits durch das Vorpressen 30 und das Vernähen 50,70 festgelegt worden ist, beeinträchtigt wird. Das heißt, die endgültige Form des herzustellenden Endprodukts wird bereits durch das Vorpressen 30, also die Herstellung des Vorformlings 130 geschaffen und das Vernähen 50,70 geschieht an einem Zwischenprodukt, das bereits die gewünschte Raumform hat. Dies stellt einen wesentlichen Vorteil gegenüber bekannten Verfahren dar, bei welchen die Lagenstruktur durch Vernähen und anschließendes Vorpressen zunächst in der Fläche festgelegt wird und erst dann ein Umformen des Schichtgeleges vorgenommen wird.

Nach dem Heißpreßvorgang 100 in Fig. 9 kann der ballistische Schutzhelm als Endprodukt entnommen und noch abschließenden Bearbeitungsschritten unterzogen werden, wie einem Glätten der Kanten, dem Anbringen eines Kantenschutzes, einer Lackierung der Oberseite, einer geeigneten Auskleidung der Helmkalotte und so fort.

## Patentansprüche

1. Verfahren zur Herstellung eines ballistischen Schutzpanzers, das die folgenden Schritte umfaßt:
- Verlegen einer Anzahl textiler Lagen (116) aufeinander zu einem Schichtgelege (114),
- Vorpressen der textilen Lagen (116) des Schichtgeleges (114) in einem Vorpressvorgang (30) zu einem Vorformling (130), dessen Raumform dem herzustellenden Endprodukt entspricht,
- und Pressen des Vorformlings (130) in einem Heißpressvorgang (100) mit höherer Temperatur als beim Vorpressvorgang (30),
**dadurch gekennzeichnet, daß** nach dem Vorpressvorgang (30) und vor dem Heißpressvorgang (100) die textilen Lagen (116) des Vorformlings (130) miteinander vernäht werden.

2. Verfahren gemäß Anspruch 1, **dadurch gekennzeichnet, daß** die Temperatur beim Heißpreßvorgang (100) zwischen 150° C und 175° C liegt.

3. Verfahren gemäß Anspruch 1 oder 2, **dadurch gekennzeichnet, daß** beim Heißpreßvorgang (100) ein höherer Druck ausgeübt wird als beim Vorpreßvorgang (30).

4. Verfahren gemäß einem der vorhergehenden Ansprüche, **dadurch gekennzeichnet, daß** der Druck beim Heißpreßvorgang (100) 200 kg/cm² beträgt.

5. Verfahren gemäß einem der vorhergehenden Ansprüche, **dadurch gekennzeichnet, daß** der Druck beim Vorpreßvorgang (30) 150 kg/cm² beträgt.

6. Verfahren gemäß einem der vorhergehenden Ansprüche, **dadurch gekennzeichnet, daß** die einzelnen textilen Lagen (116) vor dem Verlegen (10) mit einem Verbindungsmittel wie etwa Harz, Kunststoff oder Klebstoff kaschiert werden, das durch das Heißpressen (100) eine Verbindungsmatrix zur Verbindung der textilen Lagen (116) zu einem Laminat bildet.

7. Verfahren gemäß einem der vorhergehenden Ansprüche, **dadurch gekennzeichnet, daß** das Schichtgelege (114) vor dem Vorpreßvorgang (30) innerhalb einer Vorwärmform (110) vorgewärmt wird.

8. Verfahren gemäß Anspruch 7, **dadurch gekennzeichnet, daß** die Temperatur der Vorwärmform (110) 60° C beträgt.

9. Verfahren gemäß einem der vorhergehenden Ansprüche, **dadurch gekennzeichnet, daß** die textilen Lagen (116) des Vorformlings (130) vor dem Vernähen (50) punktweise aneinander fixiert werden.

10. Verfahren gemäß einem der vorhergehenden Ansprüche, **dadurch gekennzeichnet, daß** der Vorformling (130) nach dem Vernähen (50) der textilen Lagen (116) und vor dem Heißpressen (100) zumindest auf einer seiner Oberflächen mit einer Schutzschicht (150,152) versehen wird.

11. Verfahren gemäß Anspruch 10, **dadurch gekennzeichnet, daß** die Schutzschicht (150) durch eine weitere textile Lage gebildet wird, die zumindest einseitig mit dem Verbindungsmittel kaschiert ist und auf der Außenseite des Vorformlings (130) angebracht wird.

12. Verfahren gemäß Anspruch 10 oder 11, **dadurch gekennzeichnet, daß** der Vorformling (130) auf seiner Innenseite (144) zur Bildung einer Schutzschicht (152) mit dem Verbindungsmittel beschichtet wird.

13. Verfahren gemäß einem der Ansprüche 10 bis 12, **dadurch gekennzeichnet, daß** der Vorformling (130) nach dem Vernähen (50) der textilen Lagen (116) und vor dem Aufbringen der Schutzschicht(en) (150.152) einem Zwischen-Preßvorgang (60) unterzogen wird.

14. Verfahren gemäß Anspruch 13, **dadurch gekennzeichnet, daß** der Zwischen-Preßvorgang (60) bei einer niedrigeren Temperatur als der Heißpreßvorgang (100) durchgeführt wird.

15. Verfahren zur Herstellung der Helmschale eines ballistischen Schutzhelms gemäß einem der vorhergehenden Ansprüche, **dadurch gekennzeichnet, daß** beim Vernähen (50) der textilen Lagen (116) des schalenförmigen Vorformlings (130) eine Naht (132) angebracht wird, die sich vom Flächen-Mittelpunkt (140) des Vorformlings (132) ausgehend spiralförmig um den Mittelpunkt (140) herum bis zum Rand (142) der Schale windet.

16. Verfahren gemäß Anspruch 15, **dadurch gekennzeichnet, daß** nach der Anbringung der spiralförmigen Naht (132) zusätzliche Nähte (146) angebracht werden, die die schraubenförmige Naht (132) kreuzen.

17. Verfahren gemäß Anspruch 16, **dadurch gekennzeichnet, daß** der Vorformling zwischen der Anbringung der spiralförmigen Naht (132) und der Anbringung der zusätzlichen Nähte (146) einem weiteren Zwischen-Preßvorgang (80) unterzogen wird.

## Claims

1. Method for producing a ballistic protective armour, involving the following steps:
positioning a number of textile layers (116) one on top of the other in order to form a layered structure (114),
- pre-compressing the textile layers (116) of the layered structure (114) in a pre-pressing operation (30) to form a preform (130) whose spatial shape corresponds to the end product to be produced,
- and pressing the preform (130) in a hot-pressing operation (100) at a higher temperature than in the pre-pressing operation (30),
**characterised in that**, after the pre-pressing operation (30) and prior to the hot-pressing operation (100), the textile layers (116) of the preform (130) are sewn together.

2. Method according to claim 1, **characterised in that** the temperature during the hot-pressing operation (100) is between 150°C and 175°C.

3. Method according to claim 1 or 2, **characterised in that**, during the hot-pressing operation (100), a higher pressure is applied than during the pre-pressing operation (30).

4. Method according to any one of the preceding claims, **characterised in that** the pressure during the hot-pressing operation (100) is 200 kg/cm².

5. Method according to any one of the preceding claims, **characterised in that** the pressure during the pre-pressing operation (30) is 150 kg/cm².

6. Method according to any one of the preceding claims, **characterised in that** the individual textile layers (116), prior to being positioned (10), are laminated with a connection means, such as, for example, resin, plastics material or adhesive material which, owing to the hot-pressing operation (100), forms a connection matrix in order to connect the textile layers (116) to form a laminate.

7. Method according to any one of the preceding claims, **characterised in that** the layered structure (114) is preheated in a pre-heating mould (110) prior to the pre-pressing operation (30).

8. Method according to claim 7, **characterised in that** the temperature of the pre-heating mould (110) is 60°C.

9. Method according to any one of the preceding claims, **characterised in that** the textile layers (116) of the preform (130) are fixed to each other locally prior to the sewing operation (50).

10. Method according to any one of the preceding claims, **characterised in that** the preform (130), after the sewing (50) of the textile layers (116) and prior to the hot-pressing operation (100), is provided with a protective layer (150, 152) at least on one of the surfaces thereof.

11. Method according to claim 10, **characterised in that** the protective layer (150) is formed by an additional textile layer which is laminated with the connection means at least at one side and which is fitted to the outer side of the preform (130).

12. Method according to claim 10 or 11, **characterised in that** the preform (130) is coated with the connection means at the inner side (144) thereof in order to form a protective layer (152).

13. Method according to any one of claims 10 to 12, **characterised in that** the preform (130) is subjected to an intermediate pressing operation (60) after the sewing (50) of the textile layers (116) and prior to the application of the protective layers(s) (150, 152).

14. Method according to claim 13, **characterised in that** the intermediate pressing operation (60) is carried out at a lower temperature than the hot-pressing operation (100).

15. Method for producing the covering shell of a ballistic protection cover according to any one of the preceding claims, **characterised in that**, when the textile layers (116) of the bowl-like preform (130) are sewn (50), a seam (132) is applied which winds, starting from the surface centre point (140) of the preform (132), in a helical manner around the centre point (140) as far as the edge (142) of the shell.

16. Method according to claim 15, **characterised in that**, after the helical seam (132) is applied, additional seams (146) are applied which intersect with the helical seam (132).

17. Method according to claim 16, **characterised in that** the preform is subject to an additional intermediate pressing operation (80) between the helical seam (132) being applied and the additional seams (146) being applied.

## Revendications

1. Procédé de fabrication d'une cuirasse de protection balistique comprenant les étapes suivantes :
- superposition d'un nombre de couches textiles (116) pour former une structure stratifiée (114),
- précompression des couches textiles (116) de la structure stratifiée (114) dans un processus de précompression (30) pour obtenir une pré-ébauche (130) dont la forme spatiale correspond au produit final à fabriquer,
et compression de la pré-ébauche (130) dans un processus de compression à chaud (100) à une température supérieure à celle du processus de précompression (30),
**caractérisé en ce qu'**après le processus de précompression (30) et avant le processus de compression à chaud (100), les couches textiles (116) de la pré-ébauche (130) sont cousues les unes avec les autres.

2. Procédé selon la revendication 1, **caractérisé en ce que** la température lors du processus de compression à chaud (100) est comprise entre 150 °C et 175 °C.

3. Procédé selon l'une quelconque des revendications 1 ou 2, **caractérisé en ce que** lors du processus de compression à chaud (100) il est exercé une pression supérieure à celle du processus de précompression (30).

4. Procédé selon l'une quelconque des revendications 1 à 3, **caractérisé en ce que** la pression lors du processus de compression à chaud (100) est de 200 kg/cm².

5. Procédé selon l'une quelconque des revendications 1 à 4, **caractérisé en ce que** la pression lors du processus de précompression (30) est de 150 kg/cm².

6. Procédé selon l'une quelconque des revendications 1 à 5, **caractérisé en ce que** les différentes couches textiles (116) sont doublées, avant la pose (10), d'un agent de liaison tel que résine, matière plastique ou colle, qui, du fait de la compression à chaud (100), forme une matrice de liaison pour la liaison des couches textiles (116) en un stratifié.

7. Procédé selon l'une quelconque des revendications 1 à 6, **caractérisé en ce que** la structure stratifiée (114) est préchauffée avant le processus de précompression (30) à l'intérieur d'un moule de préchauffage (110).

8. Procédé selon la revendication 7, **caractérisé en ce que** la température du moule de préchauffage (110) est de 60 °C.

9. Procédé selon l'une quelconque des revendications 1 à 8, **caractérisé en ce que** les couches textiles (116) de la pré-ébauche (130) sont fixées ponctuellement les unes sur les autres avant la couture (50).

10. Procédé selon l'une quelconque des revendications 1 à 9, **caractérisé en ce que** la pré-ébauche (130) est pourvue, après couture (50) des couches textiles (116) et avant la compression à chaud (100), d'une couche de protection (150, 152) au moins sur l'une de ses surfaces.

11. Procédé selon la revendication 10, **caractérisé en ce que** la couche de protection (150) est formée par une autre couche textile qui est doublée au moins sur une face de l'agent de liaison et est placée sur la face extérieure de la pré-ébauche (130).

12. Procédé selon l'une quelconque des revendications 10 ou 11, **caractérisé en ce que** la pré-ébauche (130) est recouverte sur sa face intérieure (144) de l'agent de liaison, pour former une couche de protection (152).

13. Procédé selon l'une quelconque des revendications 10 à 12, **caractérisé en ce que** la pré-ébauche (130) est soumise à un processus de compression intermédiaire (60) après couture (50) des couches textiles (116) et avant application de la (des) couche(s) de protection (150, 152).

14. Procédé selon la revendication 13, **caractérisé en ce que** le processus de compression intermédiaire (60) est exécuté à une température plus basse que le processus de compression à chaud (100).

15. Procédé de fabrication de la coque d'un casque de protection balistique selon l'une quelconque des revendications précédentes, **caractérisé en ce que** lors de la couture (50) des couches textiles (116) de la pré-ébauche (130) en forme de coque, il est pratiqué une couture (132) qui, partant du centre des surfaces (140) de la pré-ébauche (132), tourne en spirale autour du centre (140) jusqu'au bord (142).

16. Procédé selon la revendication 15, **caractérisé en ce qu'**après réalisation de la couture (132) en spirale des coutures (146) supplémentaires sont exécutées qui croisent la couture (132) en forme de spirale.

17. Procédé selon la revendication 16, **caractérisé en ce que** la pré-ébauche est soumise à un autre processus de compression intermédiaire (80) entre la réalisation de la couture (132) en spirale et la réalisation des coutures supplémentaires (146).
